(19) **Europäisches Patentamt**
**European Patent Office**
**Office européen des brevets**

(11) **EP 4 550 629 A1**

(12) **EUROPÄISCHE PATENTANMELDUNG**

(43) Veröffentlichungstag:
07.05.2025 Patentblatt 2025/19

(51) Internationale Patentklassifikation (IPC):
*H02K 1/276* *(2022.01)*

(21) Anmeldenummer: 23206955.9

(22) Anmeldetag: 31.10.2023

(52) Gemeinsame Patentklassifikation (CPC):
H02K 1/2766; H02K 2213/03

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Innomotics GmbH**
**90441 Nürnberg (DE)**

(72) Erfinder: **Rettinger, Frank**
**97616 Bad Neustadt (DE)**

(74) Vertreter: **Siemens Patent Attorneys**
**Postfach 22 16 34**
**80506 München (DE)**

(54) **ROTOR EINER PERMANENTERREGTEN SYNCHRONMASCHINE MIT INSBESONDERE WANNENFÖRMIGEN MAGNETTASCHEN EINES POLS**

(57) Die Erfindung betrifft einen Rotor (9) einer rotatorischen permanenterregten Synchronmaschine (1) mit vergrabenen, aus Richtung Außendurchmesser (18) des Rotors (9) betrachtet konvex bzw. wannenförmig angeordneten Permanentmagneten (14) eines Pols (19), die in im Wesentlichen axial verlaufenden Ausnehmungen (13) eines Blechpakets (11) des Rotors (9) angeordnet sind,
wobei jede Ausnehmung (13) eine Tasche (36) zur Aufnahme eines oder mehrerer Permanentmagneten (14) aufweist,
wobei sich an den entgegengesetzten Enden der Taschen (36), der jeweiligen Ausnehmung (13) Flusssperren (34) befinden,
wobei an der einem Außendurchmesser (18) des Rotors (9) zugewandten Seite der Ausnehmungen (13) eines Pols (19) im Bereich zwischen Tasche (36) und Flusssperre (34) zumindest abschnittsweise Mittel zur Erhöhung einer Gegenfeldstabilität vorgesehen sind,
wobei zur Erhöhung einer Gegenfeldstabilität Stege (21) und Ausnehmungen (13) derart gestaltet sind, dass eine Gegenfeldstabilität auch im mittleren Bereich der Taschen (36) gewährleistet ist, indem D1 ≥ 2xD0 und D2 ≥ 0,7xD0.

FIG 2

EP 4 550 629 A1

**Beschreibung**

Die Erfindung betrifft einen Rotor einer permanenterregten Synchronmaschine und eine permanenterregte Synchronmaschine, als auch deren Verwendung.

Permanenterregte Synchronmaschinen werden in der Regel derart ausgelegt, dass sie im Fehlerfall, z.B. einem Stoßkurzschluss und/oder einem vordefinierten Maximalstrom im Wicklungssystem des Stators der permanenterregten Synchronmaschine ohne nennenswerte irreversible Entmagnetisierung der Permanentmagnete widerstehen. Ein derartiger Betriebszustand stellt hohe Anforderungen an die elektromagnetische Auslegung der permanenterregten Synchronmaschine, die verwendeten Magnetmaterialien als auch deren Anordnung im Rotor.

Besonders gefährdet sind dabei exponierte Bereiche der Permanentmagnete, wie z.B. die Ecken der Permanentmagnete, da sie bei Gegenfeldbelastung besonders hohen Gegenfeldern ausgesetzt sind. Dort wird es demnach als erstes zu irreversibler Entmagnetisierung der Permanentmagnete kommen.

Bei permanenterregten Synchronmaschinen mit vergrabenen Permanentmagneten werden die Permanentmagnete in im Rotor vorhandene Taschen axial eingesetzt. In der Regel werden die Permanentmagnete innerhalb der Taschen durch "Positionierungsstege" positioniert.

Diese Stege befinden sich bei bekannten Maschinenauslegungen auf der wellenseitigen Seite der Magnettasche, wie dies auch der US 9 531 226 B2 und US 2018/0248427 A1 zu entnehmen ist.

Die Gegenfeldstabilität der Maschine kann in der Regel auch durch die Verwendung von Magnetgüten mit hohem HcJ (Koerzitivfeldstärke des Permanentmagneten) und/oder durch den Einsatz von dickeren Magneten erreicht werden.

Diese höherwertigen Magnetgüten und/oder der höhere Materialeinsatz im Rotor erhöhen jedoch die Kosten einer derartigen permanenterregten Synchronmaschine.

Ausgehend davon liegt der Erfindung die Aufgabe zugrunde einen Rotor einer permanenterregten Synchronmaschine mit verbesserter Gegenfeldstabilität zu schaffen, um insbesondere bei industriellen Anwendungen einen zuverlässigen Betrieb, vor allem auch bei außergewöhnlichen Betriebszuständen gewährleisten zu können.

Die Lösung der gestellten Aufgabe gelingt durch die Merkmale der unabhängigen Ansprüche. Weitere vorteilhafte Ausgestaltungen sind den davon abhängigen Ansprüchen zu entnehmen.

Ein derartiger erfindungsgemäßer Rotor einer rotatorischen permanenterregten Synchronmaschine weist vergrabene, aus Richtung Außendurchmesser bzw. Oberfläche des Rotors betrachtet konvex/wannenförmig angeordnete Permanentmagnete eines Pols auf, die in im Wesentlichen axial verlaufenden Ausnehmungen eines magnetisch leitfähigen Körpers, insbesondere eines axial geschichteten Blechpakets des Rotors angeordnet sind,

> wobei die Pole in Umfangsrichtung betrachtet am Rotor abwechselnd d-Achsen und q-Achsen bilden, also unterschiedliche magnetische Vorzugsrichtungen aufweisen,
> wobei jede Ausnehmung eine Tasche zur Aufnahme eines oder mehrerer Permanentmagneten aufweist,
> wobei sich an den entgegengesetzten Enden der Taschen, der jeweiligen Ausnehmung - im Wesentlichen senkrecht zu einer Magnetisierungsrichtung des dort positionierten Permanentmagneten Flusssperren befinden,
> wobei an der einem Außendurchmesser des Rotors zugewandten Seite der Ausnehmungen eines Pols im Bereich zwischen Tasche und Flusssperre zumindest abschnittsweise Mittel zur Erhöhung einer Gegenfeldstabilität vorgesehen sind,
> wobei die Mittel zur Erhöhung einer Gegenfeldstabilität als Stege an den Enden der Taschen angeordnet sind und dabei zur Positionierung der Permanentmagneten in den Taschen beitragen,
> wobei die Stege zumindest abschnittsweise die Taschen zur Aufnahme der Permanentmagneten bilden,
> wobei die Stege derart ausgeführt sind, dass sie insbesondere in einem Fehlerfall und/oder Betriebszustand mit hoher Strombelastung, z.B. einem Stoßkurzschlussfall eine schützende Funktion für den Permanentmagneten ausüben,
> wobei die Ausnehmung derart gestaltet ist, dass die Gegenfeldstabilität auch den oder die Permanentmagnete bzw. deren Bereiche im mittleren Bereich der Taschen gewährleistet ist, indem der geringste Abstand zwischen Tasche des Pols im Bereich der d-Achse oder auf der d-Achse und Außendurchmesser bzw. Oberfläche des Rotors größer gleich dem 2-fachen der radialen Dicke der Tasche an dieser Stelle entspricht,
> und der geringste Abstand zwischen einer radial außenliegenden Ecke der Tasche des Pols und dem Außendurchmesser/Oberfläche des Rotors größer gleich dem 0,7-fachen der radialen Dicke der Tasche entspricht,
> also D1 $\geq$ 2xD0 und D2 $\geq$ 0,7xD0.

Eine mit einem erfindungsgemäßen Rotor ausgestattete permanenterregte Synchronmaschine weist aufgrund der hohen Gegenfeldstabilität einen äußerst zuverlässigen Betrieb auf, und ist somit in den Einsatzgebieten, wie Förderanlagen, Kompressoren, Verdichter, Lüfter, Pumpen oder einen Traktionsantrieben besonders gut geeignet.

Die verbesserte Gegenfeldstabilität des Rotors wird erfindungsgemäß durch die Stege und vor allem durch die vergleichsweise radial tief im Rotorblechpaket angeordneten Permanentmagnete erreicht.

Durch diese Anordnung der Stege auf der luftspaltseitigen Seite der Tasche bzw. Taschen und die gezielt vergleichsweise tief in einem Rotor platzierten Permanentmagnete eines Pols wird die Gegenfeldstabilität dieses Rotors im Betrieb einer permanenterregten Synchronmaschine signifikant erhöht.

Diese Permanentmagnete sind dabei je Pol - von der Oberfläche/Außendurchmesser des Rotors betrachtet - konkav bzw. wannenförmig innerhalb des Rotors angeordnet.

Jeder Pol weist zumindest einen Permanentmagneten in einer Tasche auf. Die Tasche ist Teil einer Ausnehmung, wobei die Abschnitte, die nicht von dem oder den Permanentmagneten innerhalb der Ausnehmungen eingenommen wird, vorzugsweise als Flusssperren ausgebildet sind. Insbesondere sind die jeweiligen Permanentmagnete quaderförmigen ausgeführt und befinden sich in einer Tasche.

Diese Flusssperren weisen entweder Luft oder amagnetisches Material auf. Die Flusssperren in den Polen bzw. an den Enden der Taschen des Rotors sind notwendig, um magnetische Kurzschlüsse der Permanentmagnete im Bereich der jeweiligen Pole zu vermeiden.

Im Bereich zwischen den Flusssperren und den Taschen sind Stege vorgesehen, die auf der zu einem Außendurchmesser des Rotors gewandten Seite der Ausnehmung angeordnet sind.

Die Stege an den Enden der Taschen im Bereich der Flusssperren leiten Gegenfelder um die Ecken der im Blechpaket des Rotors positionierten Permanentmagneten und führen dort zu einer deutlich homogeneren Belastung der Permanentmagneten, beispielsweise in einem Fehlerfall. Starke Feldüberhöhungen an diesen Ecken der Permanentmagnete werden somit merklich reduziert. Der zulässige Fehlerstrom im Wicklungssystem der permanenterregten Synchronmaschine erhöht sich allein dadurch bis zu 15%.

Durch die erfindungsgemäße, vergleichsweise radial tiefe Anordnung der Permanentmagneten im Blechpaket des Rotors, wird der parasitäre Einfluss der magnetischen Sättigung des Rotors vermieden oder zumindest verringert.

Während ein näher am Luftspalt bzw. Außendurchmesser des Rotors befindlicher Permanentmagnet eine vergleichsweise starke Belastung in seinem Zentrum erfährt, sind nunmehr die radial tieferliegenden Permanentmagnete nur noch moderat belastet.

Der radial tiefer im Blechpaket des Rotors angeordnete Permanentmagnet ermöglicht erfindungsgemäß ein deutlich geringeres Sättigungsniveau im Rotor radial oberhalb des Permanentmagneten, zwischen Tasche und Luftspalt der dynamoelektrischen Maschine.

Bei einem vergleichsweise hochliegenden Permanentmagneten - also näher am Außenumfang des Rotors positionierten Permanentmagneten - herrscht eine sehr hohe Sättigung. Gegenfelder werden in die Mitte des Permanentmagneten gedrängt und verursachen hier eine hohe Belastung.

Durch die Positionierung der Stege stellt sich eine optimale Wirkung dieser Stege ein, sei es als Positionshilfe oder magnetischer Entlastung, mit einer gleichzeitig erhöhter Gegenfeldbelastung des Permanentmagneten durch Sättigungseffekte ein. Somit entsteht eine durchweg homogene Belastung des oder der Permanentmagneten in einer Ausnehmung, was in Summe zu geringerer Belastung des oder der Permanentmagneten vor allem in den Ecken und im mittleren Bereich einer Tasche führt.

Diese Zusammenhänge lassen sich gemäß dem unabhängigen Anspruch 1 auch formelmäßig folgendermaßen zusammenfassen:

$$D1 >= 2 \times D0 \text{ und } D2 >= 0{,}7 \times D0$$

Dabei ist:

D0 = radiale bzw. quasiradiale Dicke der Tasche des Permanentmagneten,
D1 = geringster Abstand zwischen Zentrum der mittleren Tasche des Permanentmagneten und Außendurchmesser des Rotors (bei ungeradzahliger Anzahl der Ausnehmungen pro Pol) bzw. geringster Abstand zwischen der außenliegenden, inneren (der d-Achse zugewandten Seite) Ecke der Tasche des Permanentmagneten und Außendurchmesser des Rotors,
D2 = geringster Abstand zwischen außenliegender Ecke der Tasche (der q-Achse zugewandten, luftspaltseitigen Ecke) des Permanentmagneten und Außendurchmesser des Rotors.

Besonders vorteilhaft hat sich eine Blechgestaltung eines Pols herausgestellt, der folgende Beziehungen aufweist:

$$D1 >= 3 \times D0 \text{ und } D2 >= 1 \times D0$$

Durch die erfindungsgemäße Geometrie der Taschen und der Ausnehmungen, insbesondere der Flusssperren, lässt sich im Rotordesign je nach Auslegungsziel Magnetvolumen (Dicke) einsparen und/oder es wird die Möglichkeit eröffnet, geringere Magnetgüten bzw. kostengünstigere Permanentmagnete einzusetzen ohne Abstriche bei der Performance einer permanenterregten Synchronmaschine eingehen zu müssen.

Je nach Auslegung ist es somit sogar möglich, z.B. im Magnetwerkstoff, auf schwere Seltene Erden - oder im Extremfall gänzlich auf Seltene Erden - für die Permanentmagnete zu verzichten.

Als schwere Seltene Erden werden dabei z.B. Terbium und Dysprosium verstanden. Während als leichte Seltene Erden z.B. Neodym (für die NdFeB-Permanentmagnete) bezeichnet wird.

Die Mittel zur Gegenfeldstabilität auf der dem Außenumfang des Rotors zugewandten Seite der Ausnehmungen im Bereich zwischen Flusssperren und Taschen sind zusätzlich zur "tiefen" Positionierung der Permanentmagnete wirksam. Dort wirkt sich das Entmagnetisierungsfeld, das gegebenenfalls durch einen Stoßkurzschlussstrom in einem Wicklungssystem eines Stators generiert wird, normalerweise besonders negativ aus. Dies kann durch diese Mittel, die insbesondere als Halteelemente oder Stege ausgeführt sind, zusätzlich reduziert werden.

Ein derartiges Gegenfeld kann sich beispielsweise durch einen Stoßkurzschlussstrom, andere Belastungszustände der permanenterregten Synchronmaschine, hohe Überlastmomente, Stromfehleinprägungen des Umrichters und diverse Kurzschlussfehler im Wicklungssystem ergeben.

Vorteilhafterweise sind diese Stege bzw. Halteelemente Teil des Dynamoblechs des Rotors und sind mit ihm einstückig ausgeführt. Dies wird beispielsweise durch einen Stanzvorgang gewährleistet. Die Dimensionierung der Stege ist derart ausgeführt, dass sie z.B. durch einen Stoßkurzschlussstrom und das daraus resultierende Entmagnetisierungsfeld und der damit ggf. eintretenden Sättigung der Stege die schützende Funktion für den Permanentmagneten weiter ausüben können.

Mit anderen Worten: die schützende Funktion für den Permanentmagneten oder die Permanentmagneten eines Pols wird unabhängig davon ausgeübt, ob der Steg bzw. das Halteelement in Sättigung geht. Gegebenenfalls wird bei zunehmender Sättigung die schützende Funktion der Stege etwas geringer.

Dabei werden diese Halteelemente, insbesondere diese Stege derart gestaltet, dass sie eine Ausdehnung in tangentialer Richtung, als auch eine Ausdehnung in radialer bzw. quasi-radialer Richtung aufweisen. In radialer bzw. quasi-radialer Richtung wird sich die Ausdehnung maximal bis zur Hälfte der magnetischen Dicke des benachbarten Permanentmagneten erstrecken, um nicht einen magnetischen Kurzschluss zwischen den Magnetpolen des Permanentmagneten zu generieren.

In tangentialer Richtung der Ausnehmung wird sich die Dimensionierung des Halteelements bzw. Steg unter anderem an der Sättigung des Materials der Dynamobleche des Rotorblechpakets orientieren.

In jedem Fall soll aber die schützende Funktion für den Permanentmagneten durch die Halteelemente, insbesondere Stege und die vergleichsweise "tiefe" Anordnung der Permanentmagnete im Blechpaket des Rotors gewährleistet werden.

Durch die Anordnung von Stegen besonders auf der luftspaltseitigen Seite der Tasche bzw. der Taschen eines Pols wird die Gegenfeldstabilität des Rotors signifikant erhöht. Die Stege leiten die Gegenfelder sozusagen um die Ecken des Permanentmagneten und bewirken damit eine deutlich homogenere Belastung des Permanentmagneten im Fehlerfall. Die starken Feldüberhöhungen an den Ecken des Permanentmagneten werden erfindungsgemäß merklich reduziert. So kann damit beispielsweise der zulässige Fehlerstrom in dem Wicklungssystem des Stators erfindungsgemäß um ~15% gegenüber bisherigen Gestaltungen der Ausnehmungen einer Tasche für die Permanentmagneten eines Rotors erhöht sein.

Zusätzlich wird durch die Stege auch die Positionierungsfunktion der Permanentmagnete in den jeweiligen Ausnehmungen eines Pols übernommen.

In einer weiteren Ausführung sind die Stege bzw. Halteelemente an den Taschen nicht immer beidseitig bei jedem Blech ausgeführt, sondern können auch - über die axiale Länge des Rotors betrachtet - vorgebbar alternierend angeordnet sein. Diese alternierende Anordnung der Halteelemente reicht auch für die Positionieraufgaben, da beispielsweise ein Permanentmagnet über die axiale Länge von zwanzig Blechen reicht, so dass die Halteelemente alternierend auch nur an jedem fünften Bleche bzw. Tasche vorhanden sein können. Entscheidend bei der Anzahl der Halteelemente ist dabei, ob die Gegenfeldstabilität durch die eingeschränkte Anzahl der Halteelemente weiter im geforderten Umfang gegeben ist. Die radial "tiefe" Position der Permanentmagnete bleibt dabei natürlich unverändert.

Der Rotor der permanenterregten Synchronmaschine weist eine geradzahlige Anzahl von Polen auf (zwei-, vier-, sechs-, acht- oder höherpolige Ausführungen), wobei jeder Pol zumindest eine, im Wesentlichen konkave bzw. wannenförmig gestaltete oder angeordnete Ausnehmung aufweist, die in axialer Richtung oder bei geschrägten Rotoren dementsprechend schräg verläuft.

Ein Pol eines erfindungsgemäßen Rotors weist somit, von der Oberfläche des Rotors betrachtet, zumindest eine, im Wesentlichen konkav oder wannenförmig ausgebildete Ausnehmung auf. Die Ausnehmung ist also gekrümmt. Hierbei ist der Permanentmagnet ebenfalls gleichartig gekrümmt.

Eine konkave bzw. wannenförmig Anordnung eines Pols lässt sich auch mit mehreren dementsprechend angeordneten und gestalteten Ausnehmungen schaffen. Diese Anordnung eignet sich vor allem für quaderförmige Permanentmagneten. Jede Ausnehmung weist dabei eine Tasche und Flusssperren und optional Stege auf.

In einer Ausführung sind die in tangentialer Erstreckung der Tasche am Ende befindlichen Flusssperren symmetrisch zu einer radialen Mittelsenkrechten des Pols also der d-Achse angeordnet. Bei einer ungeradzahligen Anzahl von Ausnehmungen pro Pol verläuft diese d-Achse durch die mittlere Ausnehmung. Bei einer geradzahligen Anzahl von Ausnehmungen pro Pol verläuft diese d-Achse durch einen Blechstege zwischen den mittleren Ausnehmungen.

Jede Ausnehmung eines Pols des Rotors weist mindestens einen Permanentmagneten in seiner Tasche auf. Je nach axialer Länge des Rotors und/oder der Achshöhe und/oder Dimensionen der Tasche sind auch mehrere Permanentmagnete in einer Ausnehmung einsetzbar. Dies können vorab zusammengeklebt in die Ausnehmung eingesetzt werden. Dadurch werden vorteilhafterweise Magnetverluste, insbesondere Wirbelstromverluste im Permanentmagneten reduziert, was die Effizienz der permanenterregten Synchronmaschine steigert.

Ein Pol kann auch mehrere Schichten von Ausnehmungen aufweisen, um die Flusskonzentration im Luftspalt bei Betrieb der permanenterregten Synchronmaschine zusätzlich zu verstärken.

Jeder Pol kann, sofern er mehrere Permanentmagnete aufweist, auch Permanentmagnete unterschiedlicher Qualität und Materialeigenschaften aufweisen, um das Luftspaltfeld dementsprechend zu gestalten.

Eine Schrägung und/oder auch Staffelung des Rotors bzw. seiner Pole, über die axiale Länge des Rotors betrachtet, kann dabei weiterhin ausgeübt werden. Dies reduziert u.a. Rastmomente des permanenterregten Synchronmotors.

Als Anwendungen derartiger Rotoren in permanenterregten Synchronmaschinen sind vor allem in einem industriellen Umfeld, wie bei Pumpen, Lüfter, Verdichter, Kompressoren, Rollgängen und Förderanlagen vorgesehen, die eine sehr lange kontinuierliche Betriebsdauer aufweisen. Ebenso ist deren Einsatz bei Traktionsantrieben wie Miningfahrzeugen, E-Bussen, Straßenbahnen oder Zügen vorstellbar.

Die Erfindung sowie weitere vorteilhafte Ausgestaltungen der Erfindung, wurden anhand schematisch dargestellter Ausführungsbeispiele näher erläutert; darin zeigen:

FIG 1        einen prinzipiellen Längsschnitt einer dynamoelektrischen Maschine,
FIG 2 und 3     Detailansichten eines Querschnitts eines Rotors einer dynamoelektrischen Maschine,
FIG 4        eine weitere Detailansicht eines Querschnitts eines Rotors einer dynamoelektrischen Maschine.

Es sei angemerkt, dass sich Begriffe wie "axial", "radial", "tangential" etc. auf die in der jeweiligen Figur bzw. im jeweils beschriebenen Beispiel zum Einsatz kommende Achse 6 beziehen. Mit anderen Worten beziehen sich die Richtungen axial, radial, tangential stets auf eine Drehachse eines Rotors 9 und damit auf die entsprechende Symmetrieachse eines Stators 8. Dabei beschreibt "axial" eine Richtung parallel zur Achse 6, "radial" beschreibt eine Richtung orthogonal zur Achse 6, auf diese zu oder auch von ihr weg, und "tangential" ist eine Richtung, die in konstantem radialem Abstand zur Achse 6 und bei konstanter Axialposition kreisförmig um die Achse herum gerichtet ist. Der Ausdruck "in Umfangsrichtung" ist im Wesentlichen mit "tangential" gleichzusetzen.

In Bezug auf eine Fläche, beispielsweise eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Der Begriff "benachbart" soll im Zusammenhang mit Bauteilen, bspw. mit Spulen oder Statorzähnen, ausdrücken, dass sich im Falle von "benachbarten Bauteilen" zwischen diesen beiden Bauteilen insbesondere kein weiteres derartiges Bauteil, sondern höchstens ein leerer Zwischenraum oder gegebenenfalls ein andersartiges Bauteil befindet.

Unter dem Ausdruck "koaxiale Bauteile", bspw. koaxiale Komponenten wie Rotor 9 und Stator 8, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse 6 ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine (Teil-) Komponente vorzugsweise vollständig in der zu ihr komplementären (Teil-) Komponente angeordnet werden kann, so dass sich die innere Oberfläche der einen Komponente, beispielsweise eine Längsseite 37 einer Tasche 36 und die äußere Oberfläche der anderen Komponente, beispielsweise ein Permanentmagnet 14 idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden. Dabei ist aber nicht grundsätzlich ausgeschlossen, dass zwischen zwei komplementären Formen ein Raum vorhanden ist, der beispielsweise durch Luft oder Kleber oder Vergussmasse zumindest teilweise eingenommen wird.

Der Übersichtlichkeit wegen werden in den Figuren teilweise in den Fällen, in denen Bauteile mehrfach vorhanden sind, häufig nicht sämtliche dargestellten Bauteile mit Bezugzeichen versehen.

Die einzelnen Merkmale der bereits beschriebenen und folgenden Ausführungen sind auch in nahezu beliebiger Kombination anders zusammensetzbar, ohne den Gegenstand der Erfindung zu verlassen.

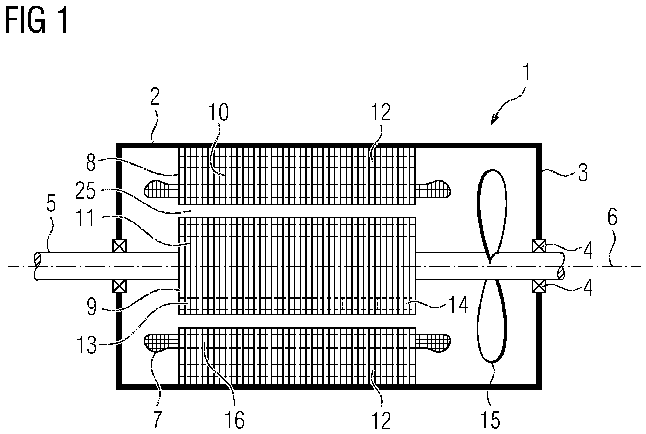

FIG 1 zeigt in einem prinzipiellen Längsschnitt eine dynamoelektrische Maschine 1, insbesondere eine permanenterregte Synchronmaschine, mit einem Stator 8 und einem Rotor 9, der über eine Momentenübertragungsanordnung, wie eine Passfeder oder eine andere Vorrichtungen drehfest mit einer Welle 5 verbunden ist. Der Stator 8 weist in nicht näher dargestellten Nuten 16 eines Blechpakets 10 ein Wicklungssystem 7 auf, das an den Stirnseiten des Blechpakets 10 Wickelköpfe ausbildet.

Bei diesem Wicklungssystem 7, z.B. als Zahnspulenwicklung, sind pro Nut 16 zwei unterschiedliche Seiten benachbarter Zahnspulen vorgesehen. Die Erfindung lässt sich auch bei anderen Wicklungssystemen des Stators 8 außer Zahnspulenwicklungen einsetzen, wie bei verteilten Wicklungen, z.B. Einschicht-Ganzlochwicklungen, Zweischicht-Ganzlochwicklungen (gesehnt) und allgemein bei Zweischicht-Bruchlochwicklungen. Ebenso sind die dabei eingesetzten Drahtformen (Rund- und Flachdrahtwicklungen ebenso wie Litzenleitern) nahezu beliebig.

Der Rotor 9 weist in dieser Ausführungsform vergrabene Permanentmagnete 14, insbesondere quaderförmige Permanentmagnete 14 auf, die in im Wesentlichen axial verlaufenden Ausnehmungen 13 eines Blechpakets 11 des Rotors 9 angeordnet sind. Als vergrabene Permanentmagnete 14 werden dabei Permanentmagnete 14 betrachtet, die nicht an der Außenoberfläche des Rotors 9 angeordnet sind.

Der Rotor 9 weist im Querschnitt betrachtet umfänglich angeordnete Pole 19 auf. Jeder Pol 19 weist zumindest eine Ausnehmung 13 auf, in der ein Permanentmagnet 14 angeordnet ist. Die Ausnehmungen 14 sind dabei - von der Luftspaltseite 25 also der Oberfläche des Rotors 9 betrachtet - konkav bzw. wannenförmig angeordnet.

Mit anderen Worten: die Krümmung von Außendurchmesser des Rotors 9 und der Krümmung der Ausnehmungen 13 der Pole 19 ist gegensätzlich.

Die Ausnehmung 13 ist in einer Ausführung also gekrümmt. Hierbei ist der Permanentmagnet 14 ebenfalls gleichartig gekrümmt. Eine konkave bzw. wannenförmig Anordnung eines Pols 19 lässt sich auch mit mehreren dementsprechend angeordneten und gestalteten Ausnehmungen 13 schaffen. Diese Anordnung eignet sich vor allem für quaderförmige Permanentmagnete 14. Jede Ausnehmung 13 weist dabei eine Tasche 36 und Flusssperren 34 und optional Stege 21 auf.

Durch elektromagnetische Wechselwirkung des Rotors 9 mit einem durch das Wicklungssystem 7 bestromten Stator 8 wird eine Welle 5 des Rotors 9 um eine Achse 6 in Drehung versetzt. Der Rotor 9 ist dabei vom Stator 8 durch einen Luftspalt 25 getrennt. Der Stator 8 ist in einem Gehäuse 2 angeordnet. Lagerschilde 3 positionieren über Lager 4 die Welle 5.

Eine Kühlung der permanenterregten Synchronmaschine 1 kann über einen Lüfter, insbesondere Eigenlüfter 15 oder einen Fremdlüfter und Kühlkanäle 12 im Blechpaket 10 des Stators 8 erfolgen. Es sind ebenso auch axial verlaufende Kühlkanäle im Rotor 9 vorstellbar.

Ebenso kann nur eine Außenkühlung außen am Gehäuse 2 mittels eines Außen-(Eigen)-Lüfters 15 oder eines Fremdlüfters stattfinden.

Es sind ebenso Mischformen dieser und anderer Kühlungen (u.a. heat-pipes, Flüssigkeitskühlung) an dieser permanenterregten Synchronmaschine 1 vorstellbar.

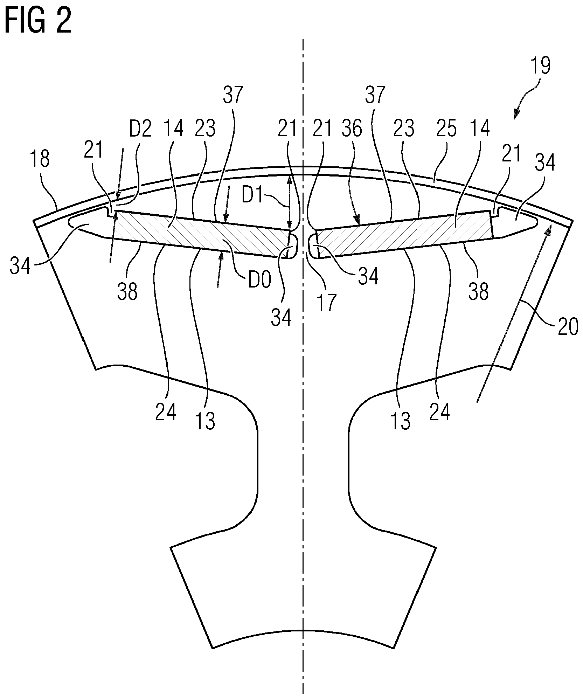

FIG 2 zeigt eine Detailansicht eines Querschnitts eines Pols 19. Die konkave bzw. wannenförmige Gestaltung des Pols 19 wird in diesem Fall durch eine V-förmige Anordnung zweier Ausnehmungen 13 geschaffen.

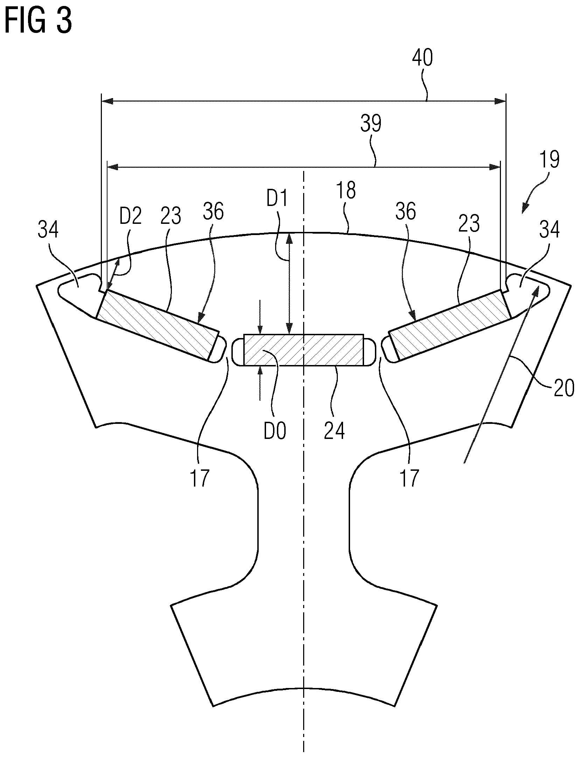

Durch den Luftspalt 25 vom Stator 8 getrennt, ist der Rotor 9 mit seinen Permanentmagneten 14 angeordnet. Diese Permanentmagnete 14 sind in dieser Ausführungsform -von der Oberfläche des Rotors 9 betrachtet - Konkav oder wannenförmige angeordnet, insbesondere V-förmig (gemäß FIG 2) oder U-förmig oder wannenförmig (gemäß FIG 3) innerhalb des Rotors 9 angeordnet.

Allgemein gesprochen: Die Mitte eines Pols 19 liegt radial tiefer als dessen Randbereiche. Mit anderen Worten: die Mitte eines Pols 19 ist weiter vom Außendurchmesser des Rotors 9 beabstandet wie dessen Randbereiche.

Der Permanentmagnet 14 ist insbesondere quaderförmig ausgeführt und befindet sich in einer Tasche 36. Die Tasche 36 ist Teil einer Ausnehmung 13, wobei der Abschnitt, der nicht vom Permanentmagneten 14 innerhalb der Ausnehmungen 13 eingenommen wird, vorzugsweise als Flusssperren 34 ausgebildet sind.

Diese Flusssperren 34 weisen entweder Luft oder amagnetisches Material auf. Die Flusssperren 34 in den Polen 19 bzw. um die Taschen 36 des Rotors 9 sind notwendig, um magnetische Kurzschlüsse der Permanentmagnete 14 im Bereich der jeweiligen Pole 19 zu vermeiden.

Zwischen den Flusssperren 34 und den Taschen 36 sind Stege 21 vorgesehen, die auf der zum Luftspalt 25 gewandten Seite der Ausnehmung 13 vorgesehen sind. Durch diese erfindungsgemäße Anordnung der Stege 21 kann eine Entmagnetisierung der Permanentmagnete 14, insbesondere in den Randbezirken der Permanentmagnete 14, beispielsweise durch einen Stoßkurzschluss im Wicklungssystem 7 des Stators 8 überwiegend vermieden werden.

Die Flusssperren 34 der Ausnehmungen an den Enden des jeweiligen Pols 19 weisen eine radiale Mindestbreite Blech zum Außendurchmesser 18 des Rotors 9 auf. Dies hat u.a. mechanische Gründe, um den Fliehkraftbeanspruchungen Stand zu halten.

Diese Zusammenhänge - vergleichsweise "tiefe" Anordnung der Permanentmagnete im Blechpaket 11 und Gewährleistung einer Gegenfeldstabiltät auch in den Randbereichen der Pole 19 - lassen sich erfindungsgemäß formelmäßig folgendermaßen zusammenfassen:

$$D1 \geq 2 \times D0 \text{ und } D2 \geq 0,7 \times D0$$

Dabei ist:

D0 = radiale bzw. quasiradiale Dicke der Tasche des Permanentmagneten,
D1 = geringster Abstand zwischen Zentrum der mittleren Tasche des Permanentmagneten und Außendurchmesser des Rotors (bei ungeradzahliger Anzahl der Ausnehmungen pro Pol) bzw. geringster Abstand zwischen der außenliegenden, inneren (der d-Achse zugewandten Seite) Ecke der Tasche des Permanentmagneten und Außendurchmesser des Rotors,
D2 = geringster Abstand zwischen außenliegender Ecke der Tasche (der q-Achse zugewandten, luftspaltseitigen Ecke) des Permanentmagneten und Außendurchmesser des Rotors.

Für das Ausführungsbeispiel gemäß FIG 2 gilt demnach:

$$D1 \geq 2 \times D0 \text{ und } D2 \geq 0,7 \times D0$$

Daraus ergibt sich auch ein besonders günstiger Verlauf der Flusssperren 34 einer oder der Ausnehmung(en) 13 an den Randbereichen eines Pols 19, bei der dann der Abstand 40 der Flusssperren 34 radial über den Ausnehmungen 13 dieses Pols 19 zwischen dem 0,9-fachen und dem 1,1-fachen der tangentialen Länge der Taschen 36 (Abstand 39 zwischen den zwei äußeren Stegen 21 der äußeren Ausnehmungen 13 eines Pols 19) entspricht.

Die Ausnehmung 13 weist einen Bereich auf, bei dem der oder die Permanentmagnete 14 angeordnet sind. Dies wird als Tasche 36 bezeichnet. Die Permanentmagnete 14 liegen dabei an den Längsseiten 37, 38 der Tasche 36, insbesondere an der außenliegenden Längsseite 37 komplementär an. Mit anderen Worten, es ist dort ein durchgängiger Kontakt - gegebenenfalls mit einer Klebeschicht versehen - von Blechen und Permanentmanget 14 vorhanden.

In der Regel ist die Tasche 36 etwas größer gestaltet als der Permanentmagnet 14, da Platz zum Fügen und/oder Toleranzen berücksichtig werden müssen. Dieser gegebenenfalls freie Raum wird dann mit Kleber oder Vergussmasse gefüllt, bzw. kann bei anderen Befestigungsarten, wie Verklemmen oder Verstemmen auch nur Luft sein.

Es gibt somit eine außenliegende Längsseite 37 und eine innenliegende Längsseite 38 der Tasche 36. Die außenliegende Längsseite 37 weist im Wesentlichen zum Luftspalt 25, die innenliegende Längsseite 38 zur Welle 5 bzw. Achse 6. Der Permanentmagnet 14 ist in die Tasche 36 derart eingesetzt, dass sein Nordpol und sein Südpol jeweils den Längsseiten 37, 38 zugewandt sind. D.h., der Nordpol befindet sich beispielsweise an der außenliegenden Längsseite 37 und der Südpol demnach auf der innenliegende Längsseite 38. Der Permanentmagnet 14 hat also eine Luftspaltseite 23 und eine Achsseite 24. Die Permanentmagnete eines Pols 19 sind dabei gleich ausgerichtet um dort keine magnetischen Kurzschlüsse zu generieren.

In dem Bereich des Übergangs von der Tasche 36 zu den Flusssperren 34 sind Stege 21 bzw. Halterungen an der zum Luftspalt 25 gewandten Seite der Ausnehmungen 13 vorhanden. Neben dem Vorteil, dass diese Stege 21 bzw. Halterungen etwaigen Entmagnetisierungserscheinungen bei einem Stoßkurzschluss des Wicklungssystems 7 entgegenwirken, sind diese Stege 21 bzw. Halterungen auch zur Positionierung und Fixierung der Permanentmagnete 14 in der jeweiligen Ausnehmung 13 geeignet.

Nachdem in Axialrichtung betrachtet der Rotor 9 axial geschichtete Bleche aufweist, ist in einer weiteren Ausführung auch vorstellbar, dass derartige Stege 21 und Halterungen nur an jedem x-ten Blech oder wechselseitig vorhanden sind. Diese Ausgestaltung reicht eindeutig zur Positionierung der Permanentmagnete 14, und je nach dem zu erwartenden Stoßkurzschlussstrom auch gegenüber den Entmagnetisierungserscheinungen.

Die Permanentmagnetanordnung einer Tasche 36 bzw. eines Pols 19 bzw. einer Ausnehmung 13 kann demnach einen einstückig ausgeführten Permanentmagnet 14 oder mehrere Permanentmagnete 14 in axialer und/oder Umfangsrichtung aufweisen.

Nach FIG 2, 3 sind die Stege 21 und die Flusssperren 34 bzgl. einer radialen Mittelsenkrechten eines Pols, also der d-Achse achsensymmetrisch aufgebaut.

FIG 3 zeigt drei Permanentmagnete 14 in drei Ausnehmungen 13 mit jeweils einer Tasche 36 die durch einen Blechsteg 17 - separiert sind.

In axialer Richtung kann gemäß den Ausführungen nach FIG 2, FIG 3 nur ein oder mehrere Permanentmagnete 14 vorgesehen sein - je nach axialer Länge des Blechpakets 11 und/oder einer eventuellen Staffelung des Blechpakets 11 des Rotors 9.

Die Pole 19 des Rotors 9 sind, in Umfangsrichtung betrachtet bzgl. ihrer Magnetisierungsrichtung alternierend angeordnet.

Die quasi-radiale Erstreckung der Stege 21 bewegt sich insbesondere zwischen ca. 0,7 bis 1mm. Bevorzugt wird aus elektromagnetischer Sicht - zumindest bei gewissen Ausführungen - eine quasi-radiale Erstreckung der Stege 21 von 0,75mm.

Die oben genannten Ausführungen beziehen sich insbesondere auf eine konkave bzw., wannenförmige Schicht I von Ausnehmungen 13 eines Pols 19.

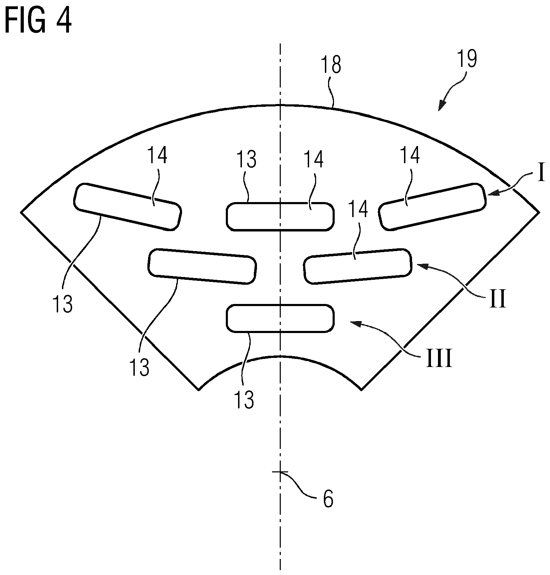

FIG 4 zeigt einen beispielhaften mehrschichtigen Pol 19 eines Rotors 9. Dabei sind mehrere wannenförmig angeordnete Schichten (I, II, III) von Ausnehmungen 13 mit Permanentmagneten 14 radial untereinander angeordnet. Der Übersichtlichkeit halber sind diese Ausnehmungen 13 ohne Flusssperren 34 gezeichnet. Jede dieser Ausnehmungen 13 weist jedoch Flusssperren 34 nach FIG 2 oder FIG 3 auf.

Die erfindungsgemäßen Vorteile sind besonders in der radial äußeren Schicht I der Ausnehmungen 13 mit ihren Permanentmagneten 14 wirksam.

Radial weiter außenliegende Schichten (z.B. Schicht I) eines Pols 19 weisen tendenziell mehr Ausnehmungen 13 auf, als die radial weiter innenliegenden Schichten (z.B. Schicht II oder Schicht III). Vorteilhafterweise sind die Taschen 36 dabei gleich dimensioniert, so dass gleich dimensionierte Permanentmagnete 14 einsetzbar sind.

Die Taschen 36 pro Pol 19 können ebenso unterschiedlich dimensioniert sein. Ebenso sind auch unterschiedliche Magnetmaterialien in der einzelnen Ausnehmungen 13 eines Pols 19 einsetzbar.

Ebenso können die Ausnehmungen 13 und damit auch die Permanentmagnete 14 auch gekrümmt ausgeführt sein.

Jede Ausnehmung 13 eines Pols 19 des Rotors 9, insbesondere nach den obigen Ausführungen, weist grundsätzlich mindestens einen Permanentmagneten 14 in seiner Tasche 36 auf. Je nach axialer Länge des Rotors 9 und/oder seiner Achshöhe und/oder Dimensionen der Tasche 36 sind auch mehrere Permanentmagnete 14 in einer Ausnehmung 13 einsetzbar. Dabei ist ein axiale und/oder radiale und/oder umfängliche Anordnung von Permanentmagneten 14 in einer Tasche 36 vorstellbar. Diese können, insbesondere vorab zusammengeklebt, in die jeweilige Tasche 36 der Ausnehmung 13 eingesetzt werden. Durch diese Modularisierung der Permanentmagnete 14 werden vorteilhafterweise Magnetverluste, insbesondere Wirbelstromverluste im Permanentmagneten 14 reduziert, was die Effizienz der permanenterregten Synchronmaschine 1 steigert.

Die der Erfindung zugrundeliegende Idee lässt sich ebenso auf permanenterregte Synchronmaschinen 1 mit Außenläufer übertragen, wie sie z.B. bei direkt angetriebenen Generatoren von Windkraftanlagen eingesetzt werden.

Derartige Rotoren 9 werden vor allem in permanenterregten Synchronmaschinen 1 eingesetzt, die im industriellen Umfeld betrieben werden. Dabei sind sie als Antriebe von Pumpen, Lüfter, Verdichter, Kompressoren, Rollgängen, Förderanlagen vorgesehen, die eine sehr lange kontinuierliche Betriebsdauer mit vergleichsweise geringen Lastschwankungen aufweisen.

Derartige permanenterregte Synchronmaschinen 1 sind auch bei Traktionsantrieben wie Miningfahrzeugen, E-Bussen, Straßenbahnen oder Zügen einsetzbar, um durch die Erhöhung der Gegenfeldstabilität einen zuverlässigeren Betrieb der jeweiligen Fahrzeuge zu gewährleisten.

**Patentansprüche**

1. Rotor (9) einer rotatorischen permanenterregten Synchronmaschine (1) mit vergrabenen, aus Richtung Außendurchmesser (18) des Rotors (9) betrachtet konkav bzw. wannenförmig angeordneten Permanentmagneten (14) eines Pols (19), die in im Wesentlichen axial verlaufenden Ausnehmungen (13) eines magnetisch leitfähigen Körpers, insbesondere eines axial geschichteten Blechpakets (11) des Rotors (9) angeordnet sind, wobei die Pole (19) in Umfangsrichtung betrachtet am Rotor (9) abwechselnd d-Achsen und q-Achsen bilden, also unterschiedliche magnetische Vorzugsrichtungen aufweisen,

   wobei jede Ausnehmung (13) eine Tasche (36) zur Aufnahme eines oder mehrerer Permanentmagneten (14) aufweist,
   wobei sich an den entgegengesetzten Enden der Taschen (36), der jeweiligen Ausnehmung (13) - im Wesentlichen senkrecht zu einer Magnetisierungsrichtung des dort positionierten Permanentmagneten (14) Flusssperren (34) befinden,
   wobei an der einem Außendurchmesser (18) des Rotors (9) zugewandten Seite der Ausnehmungen (13) eines Pols (19) im Bereich zwischen Tasche (36) und Flusssperre (34) zumindest abschnittsweise Mittel zur Erhöhung einer Gegenfeldstabilität vorgesehen sind,

wobei die Mittel zur Erhöhung einer Gegenfeldstabilität als Stege (21) an den Enden der Taschen (36) angeordnet sind und dabei zur Positionierung der Permanentmagneten (14) in den Taschen (36) beitragen,

wobei die Stege (21) zumindest abschnittsweise die Taschen (36) zur Aufnahme der Permanentmagneten (14) bilden,

wobei die Stege (21) derart ausgeführt sind, dass sie insbesondere in einem Fehlerfall und/oder Betriebszustand mit hoher Strombelastung, z.B. einem Stoßkurzschlussfall eine schützende Funktion für den Permanentmagneten (14) ausüben, wobei die Ausnehmung (13) derart gestaltet ist, dass die Gegenfeldstabilität auch den oder die Permanentmagnete (14) bzw. deren Bereiche im mittleren Bereich der Taschen (36) gewährleistet ist, indem der geringste Abstand (D1) zwischen Tasche (36) des Pols (19) im Bereich der d-Achse oder auf der d-Achse und Außendurchmesser bzw. Oberfläche (18) des Rotors (9) größer gleich dem 2-fachen der radialen Dicke (D0) der Tasche (36) an dieser Stelle entspricht,

und der geringste Abstand (D2) zwischen einer radial außenliegenden Ecke der Tasche (36) des Pols (19) und dem Außendurchmesser (18) bzw. Oberfläche des Rotors (9) größer gleich dem 0,7-fachen der radialen Dicke (D0) der Tasche (36) entspricht,

also D1 ≥ 2xD0 und D2 ≥ 0,7xD0.

2. Rotor (9) einer rotatorischen permanenterregten Synchronmaschine (1) nach, Anspruch 1, **dadurch gekenn-zeichnet**, dass die konkav bzw. wannenförmig angeordneten Permanentmagneten (14) eines Pols (19) aus Richtung Außendurchmesser (18) des Rotors (9) betrachtet, V- oder U-förmig angeordnet sind.

3. Rotor (9) einer rotatorischen permanenterregten Synchronmaschine (1) nach, Anspruch 1 oder 2, **dadurch gekennzeichnet**, dass die Mittel zur Erhöhung einer Gegenfeldstabilität, insbesondere die Halteelemente in axialer Richtung des Rotors (9) vorgebbar alternierend an den Taschen (36) der Bleche des Rotors (9) angeordnet sind.

4. Rotor (9) einer rotatorischen permanenterregten Synchronmaschine (1) nach einem der vorhergehenden Ansprüche, **da-durch gekennzeichnet**, dass die radiale bzw. quasi-radiale Erstreckung der Stege (21), weg vom Außendurchmesser (18) des Rotors (9), maximal bis zur Hälfte der magnetischen Dicke (D0) des in der Tasche (36) benachbarten Permanentmagneten (14) reicht, insbesondere eine radiale bzw. quasi-radiale Erstreckung von ca. 0,7mm bis 1mm aufweist.

5. Rotor (9) einer rotatorischen permanenterregten Synchronmaschine (1) nach einem der vorhergehenden Ansprüche, **da - durch gekennzeichnet**, dass pro Pol (19) und/oder Ausnehmung (13) zumindest ein Permanentmagnet (14) vorgesehen ist.

6. Rotor (9) einer rotatorischen permanenterregten Synchronmaschine (1) nach einem der vorhergehenden Ansprüche, **da - durch gekennzeichnet**, dass ein Abstand (39) der äußeren Flusssperren (34) der Ausnehmungen (13) eines Pols (19) radial über den Ausnehmungen (13) zwischen dem 0,9-fachen und dem 1,1-fachen der tangentialen Länge der äußeren Taschen (36) eines Pols, also einem Abstand (40) zwischen zwei äußeren Stegen (21) eines Pols (19) entspricht.

7. Permanenterregte Synchronmaschine (1) mit einem Stator (8) und einem davon durch einen Luftspalt (25) beabstandeten Rotor (9) mit vergrabenen, aus Richtung Außendurchmesser (18) des Rotors (9) betrachtet konkav bzw. wannenförmig angeordneten Permanentmagneten (14) eines Pols (19), die in im Wesentlichen axial verlaufenden Ausnehmungen (13) eines magnetisch leitfähigen Körpers, insbesondere eines axial geschichteten Blechpakets (11) des Rotors (9) angeordnet sind,

wobei die Pole (19) in Umfangsrichtung betrachtet am Rotor (9) abwechselnd d-Achsen und q-Achsen bilden, also unterschiedliche magnetische Vorzugsrichtungen aufweisen,

wobei jede Ausnehmung (13) eine Tasche (36) zur Aufnahme eines oder mehrerer Permanentmagneten (14) aufweist,

wobei sich an den entgegengesetzten Enden der Taschen (36), der jeweiligen Ausnehmung (13) - im Wesentlichen senkrecht zu einer Magnetisierungsrichtung des dort positionierten Permanentmagneten (14) Flusssperren (34) befinden,

wobei an der einem Außendurchmesser (18) des Rotors (9) zugewandten Seite der Ausnehmungen (13) eines Pols (19) im Bereich zwischen Tasche (36) und Flusssperre (34) zumindest abschnittsweise Mittel zur Erhöhung einer Gegenfeldstabilität vorgesehen sind,

wobei die Mittel zur Erhöhung einer Gegenfeldstabilität als Stege (21) an den Enden der Taschen (36) angeordnet sind und dabei zur Positionierung der Permanentmagneten (14) in den Taschen (36) beitragen,

wobei die Stege (21) zumindest abschnittsweise die Taschen (36) zur Aufnahme der Permanentmagneten (14) bilden,

wobei die Stege (21) derart ausgeführt sind, dass sie insbesondere in einem Fehlerfall und/oder Betriebszustand mit hoher Strombelastung, z.B. einem Stoßkurzschlussfall eine schützende Funktion für den Permanentmagneten (14) ausüben, wobei die Ausnehmung (13) derart gestaltet ist, dass die Gegenfeldstabilität auch den oder die Permanentmagnete (14) bzw. deren Bereiche im mittleren Bereich der Taschen (36) gewährleistet ist, indem der geringste Abstand (D1) zwischen Tasche (36) des Pols (19) im Bereich der d-Achse oder auf der d-Achse und Außendurchmesser bzw. Oberfläche (18) des Rotors (9) größer gleich dem 2-fachen der radialen Dicke (D0) der Tasche (36) an dieser Stelle entspricht,

und der geringste Abstand (D2) zwischen einer radial außenliegenden Ecke der Tasche (36) des Pols (19) und dem Außendurchmesser (18) bzw. Oberfläche des Rotors (9) größer gleich dem 0,7-fachen der radialen Dicke (D0) der Tasche (36) entspricht,

also $D1 \geq 2 \times D0$ und $D2 \geq 0,7 \times D0$.

8. Förderanlage, Kompressor, Verdichter, Lüfter, Pumpe oder Traktionsantrieb mit zumindest einer permanenterregten Synchronmaschine (1) nach Anspruch 7.

FIG 1

FIG 2

FIG 3

FIG 4

Europäisches Patentamt
European Patent Office
Office européen des brevets

# EUROPÄISCHER RECHERCHENBERICHT

Nummer der Anmeldung
EP 23 20 6955

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 4 060 873 A1 (SIEMENS AG [DE]) 21. September 2022 (2022-09-21) * Absätze [0001], [0038], [0041], [0046], [0055], [0058]; Anspruch 7; Abbildungen 1, 3, 10 * ----- | 1-8 | INV. H02K1/276 |
| A | CN 109 792 176 B (BOSCH GMBH ROBERT) 2. Februar 2021 (2021-02-02) * Abbildung 1 * ----- | 1 | |
| A | CN 116 508 234 A (JAGUAR LAND ROVER LTD) 28. Juli 2023 (2023-07-28) * Abbildung 4 * ----- | 1 | |
| A | EP 4 138 273 A1 (SIEMENS AG [DE]) 22. Februar 2023 (2023-02-22) * Abbildungen 6, 7 * ----- | 1 | |
| | | | RECHERCHIERTE SACHGEBIETE (IPC) |
| | | | H02K |

Der vorliegende Recherchenbericht wurde für alle Patentansprüche erstellt

1

| Recherchenort | Abschlußdatum der Recherche | Prüfer |
|---|---|---|
| Den Haag | 28. März 2024 | Dragojlovic, Djordje |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**       EP 23 20 6955

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-03-2024

| Im Recherchenbericht angeführtes Patentdokument | Datum der Veröffentlichung | Mitglied(er) der Patentfamilie | Datum der Veröffentlichung |
|---|---|---|---|
| EP 4060873 A1 | 21-09-2022 | CN 117121337 A | 24-11-2023 |
| | | EP 4060873 A1 | 21-09-2022 |
| | | EP 4244955 A1 | 20-09-2023 |
| | | WO 2022194819 A1 | 22-09-2022 |
| CN 109792176 B | 02-02-2021 | CN 109792176 A | 21-05-2019 |
| | | DE 102017209207 A1 | 29-03-2018 |
| | | EP 3520199 A1 | 07-08-2019 |
| | | US 2019238014 A1 | 01-08-2019 |
| | | WO 2018059828 A1 | 05-04-2018 |
| CN 116508234 A | 28-07-2023 | CN 116508234 A | 28-07-2023 |
| | | EP 4241369 A1 | 13-09-2023 |
| | | GB 2601109 A | 25-05-2022 |
| | | KR 20230096099 A | 29-06-2023 |
| | | US 2024014702 A1 | 11-01-2024 |
| | | WO 2022096528 A1 | 12-05-2022 |
| EP 4138273 A1 | 22-02-2023 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9531226 B2
- US 20180248427 A1